# EUROPEAN PATENT APPLICATION

(11) **EP 4 704 182 A1**
(43) Date of publication of application: **04.03.2026**
(21) Application number: 24796619.5
(22) Date of filing: 14.03.2024
(51) Int. Cl.: H01M 4/505, C01G 45/02, C01G 51/00, C01G 53/00, C01G 53/04, H01M 4/131, H01M 4/525

(54) **POSITIVE ELECTRODE ACTIVE MATERIAL AND LITHIUM ION SECONDARY BATTERY**

(30) Priority: 28.04.2023 JP 2023074743
(71) Applicant: TOYOTA JIDOSHA KABUSHIKI KAISHA, Toyota-shi Aichi 471-8571 (JP)
(72) Inventor: YUBUCHI, So, Toyota-shi, Aichi 471-8571 (JP); YOSHIDA, Jun, Toyota-shi, Aichi 471-8571 (JP)
(74) Representative: D Young & Co LLP
(86) International application number: PCT/JP2024/009926
(87) International publication number: WO 2024/224861

(57) **Abstract**

Disclosed is a positive electrode active material having an O2-type structure and having a large capacity. The positive electrode active material of the present disclosure comprises a Li-containing oxide. The Li-containing oxide has an O2-type structure. The Li-containing oxide at least comprises, as constituent elements, at least one element among Mn, Ni, and Co; Li; and O. An X-ray diffraction pattern of the Li-containing oxide satisfies 0 ≤ I1/I2 ≤ 0.30. The I₁ is an intensity of an X-ray diffraction peak originating from (002) plane of a T#2-type structure, and the I2 is an X-ray diffraction peak intensity originating from (002) plane of the O2-type structure.

## Description

### FIELD

The present application discloses a positive electrode active material and a lithium-ion secondary battery.

### BACKGROUND

Positive electrode active materials having an O2-type structure are known. As disclosed in PTL 1, a positive electrode active material having an O2-type structure can be obtained by ion exchange of at least a portion of Na in a Na-containing oxide having a P2-type structure with Li.

### [CITATION LIST]

### [PATENT LITERATURE]

[PTL 1] Japanese Unexamined Patent Publication (Kokai) No. 2011-170994

### SUMMARY

### [TECHNICAL PROBLEM]

Conventional positive electrode active materials having an O2-type structure have room for improvement in terms of capacity.

### [SOLUTION TO PROBLEM]

The present application, as a means for achieving the object above, discloses the following plurality of aspects.

### <Aspect 1>

A positive electrode active material, comprising a Li-containing oxide, wherein
the Li-containing oxide has an O2-type structure,
the Li-containing oxide at least comprises, as constituent elements,
   at least one element among Mn, Ni, and Co;
   Li; and
   O,
an X-ray diffraction pattern of the Li-containing oxide satisfies 0 ≤ I₁/I₂ ≤ 0.30,
the I1 is an intensity of an X-ray diffraction peak originating from (002) plane of a T#2-type structure, and
the I2 is an intensity of an X-ray diffraction peak originating from (002) plane of the O2-type structure.

### <Aspect 2>

The positive electrode active material according to Aspect 1, wherein
the Li-containing oxide has a chemical composition represented by LiₐNabMnₓ₋ₚNi_{y-q}Co_{z-r}M_{p+q+r}O₂ (where 0 < a ≤ 1.00; 0 ≤ b ≤ 0.20; x + y + z = 1; and 0 ≤ p + q + r < 0.17, and the element M is at least one selected from B, Mg, Al, K, Ca, Ti, V, Cr, Fe, Cu, Zn, Ga, Ge, Sr, Y, Zr, Nb, Mo, and W).

### <Aspect 3>

The positive electrode active material according to Aspect 1 or 2, wherein
the Li-containing oxide comprises, as constituent elements, at least Li, Mn, Li, Co, and O.

### <Aspect 4>

A lithium-ion secondary battery, comprising a positive electrode active material layer, an electrolyte layer, and a negative electrode active material layer, wherein
the positive electrode active material layer comprises the positive electrode active material according to any of Aspects 1 to 3.

### [ADVANTAGEOUS EFFECTS OF INVENTION]

The positive electrode active material of the present disclosure has an O2-type structure and has a large capacity.

### BRIEF DESCRIPTION OF DRAWINGS

FIG. 1 shows one example of the flow of a manufacturing method for a Li-containing oxide having an O2-type structure.
FIG. 2 schematically shows one example of the configuration of a lithium-ion secondary battery.
FIG. 3 shows the X-ray diffraction pattern of each of Examples 1 and 2 and Comparative Examples 1 and 2.
FIG. 4 shows the relationship between I₁/I₂ and capacity.

### DESCRIPTION OF EMBODIMENTS

### 1. Positive electrode active material

The positive electrode active material according to the embodiments comprises a Li-containing oxide. The Li-containing oxide has an O2-type structure. The Li-containing oxide at least comprises, as constituent elements, at least one element among Mn, Ni, and Co; Li; and O. An X-ray diffraction pattern of the Li-containing oxide satisfies 0 ≤ I₁/I₂ ≤ 0.30. The I₁ is an X-ray diffraction peak intensity originating from the (002) plane of a T#2-type structure, and the I₂ is an X-ray diffraction peak intensity originating from the (002) plane of the O2-type structure.

### 1.1 Crystal structure

The Li-containing oxide according to the embodiments has at least an O2-type structure (belonging to space group P63mc) as a crystal structure. The Li-containing oxide according to the embodiments may have a crystal structure other than an O2-type structure, in addition to having an O2-type structure. Examples of the crystal structure other than an O2-type structure include a T#2-type structure (belonging to space group Cmca) and an O6-type structure (belonging to space group R-3m, with a c-axis length of 2.5 nm or more and 3.5 nm or less, typically 2.9 nm or more and 3.0 nm or less, and differing from an O3-type structure belonging to the same space group R-3m), formed when Li is deintercalated from an O2-type structure. However, as described below, the Li-containing oxide according to the embodiments comprises a small amount of T#2-type structure. The Li-containing oxide according to the embodiments may have an O2-type structure as the main phase, or may have a crystal structure (for example, O6-type structure) other than an O2-type structure as the main phase. In the Li-containing oxide according to the embodiments, a crystal structure constituting the main phase can change depending on the charging and discharging states.

### 1.1.1 X-ray diffraction peak intensity

The X-ray diffraction pattern of the Li-containing oxide according to the embodiments satisfies 0 ≤ I₁/I₂ ≤ 0.30. The I₁ is an X-ray diffraction peak intensity originating from the (002) plane of a T#2-type structure, and the I₂ is an X-ray diffraction peak intensity originating from the (002) plane of the O2-type structure.

In conventional O2-type positive electrode active materials, a T#2-type structure is unavoidably formed together with an O2-type structure, and the X-ray diffraction peak intensity originating from the T#2-type structure is large. In the prior art, sufficient consideration has not been given to decreasing this T#2-type structure. In the Li-containing oxide according to the embodiments, by adopting the conditions described below as the synthesis conditions, the X-ray diffraction peak intensity I2 originating from the O2-type structure is increased to a predetermined value or higher relative to the X-ray diffraction peak intensity I1 originating from the T#2-type structure. According to the findings of the present inventors, in the X-ray diffraction pattern of the Li-containing oxide, the lower the X-ray diffraction peak originating from the T#2-type structure relative to the X-ray diffraction peak originating from the O2-type structure, the more the capacity of the positive electrode active material is increased.

In an X-ray diffraction pattern of the Li-containing oxide according to the embodiments, the ratio I₁/I₂ of X-ray diffraction peak intensity I1 originating from the (002) plane of the T#2-type structure to X-ray diffraction peak intensity I2 originating from the (002) plane of the O2-type structure satisfies 0 ≤ I₁/I₂ ≤ 0.30. The X-ray diffraction pattern may satisfy 0 ≤ I₁/I₂ ≤ 0.27, 0 ≤ I₁/I₂ ≤ 0.25, 0 ≤ I₁/I₂ ≤ 0.23, 0 ≤ I₁/I₂ ≤ 0.20, 0 ≤ I₁/I₂ ≤ 0.17, 0 ≤ I₁/I₂ ≤ 0.15, 0 ≤ I₁/I₂ ≤ 0.13, 0 ≤ I₁/I₂ ≤ 0.10, 0 ≤ I₁/I₂ ≤ 0.05, 0 ≤ I₁/I₂ ≤ 0.01, or I₁/I₂ = 0.

### 1.1.2 Measurement method of X-ray diffraction peak intensity

The "X-ray diffraction pattern of the Li-containing oxide" and "X-ray diffraction peak intensity" in the present application refer to those acquired under the following conditions. Specifically, an X-ray diffraction pattern is acquired by subjecting the Li-containing oxide to a 2θ/θ scan using an X-ray diffractometer (Rigaku, Automated Multipurpose X-ray Diffractometer SmartLab), CuKα as the radiation source, and tube voltage of 45 kV, tube current of 200 mA, step size of 0.02°, and scanning speed of 1°/min. In the X-ray diffraction pattern, the X-ray diffraction peak originating from the (002) plane of the T#2-type structure and the X-ray diffraction peak originating from the (002) plane of the O2-type structure are identified. After subtracting the background value near the peaks from the X-ray diffraction pattern, the I1/I2 above can be determined from the intensities of the X-ray diffraction peaks.

### 1.1.3 Crystallite

The Li-containing oxide according to one embodiment may be a single crystal consisting of one crystallite, or may be a polycrystal comprising a plurality of crystallites. For example, the Li-containing oxide according to one embodiment may be composed of a plurality of crystallites on the surface thereof. In other words, the Li-containing oxide may have, on the surface thereof, a structure in which the plurality of crystallites are connected to one another. When the surface of the Li-containing oxide is composed of a plurality of crystallites, crystal grain boundaries are present on the surface. The crystal grain boundaries may be entrances and exits for intercalation. Specifically, when the Li-containing oxide is a polycrystal comprising a plurality of crystallites, expected effects include a decrease in reaction resistance due to the increased number of intercalation entrances and exits, a decrease in diffusion resistance due to shortened migration distance of lithium ions, and prevention of cracking due to a decrease in absolute quantities of expansion and contraction amounts during charging and discharging. The size of the crystallites may be large or small. However, it is considered that the smaller the size of the crystallites, the larger the number of crystal grain boundaries, and the more easily the above advantageous effects are exhibited. For example, when the diameter of crystallites constituting the Li-containing oxide is less than 1 µm, higher performance is easily obtained. Note that the "crystallite" and "crystallite diameter" can be determined by observing the surface of the Li-containing oxide with a scanning electron microscope (SEM) or a transmission electron microscope (TEM). Specifically, when a surface of a Li-containing oxide is observed and a closed region surrounded by crystal grain boundaries is observed, the region is regarded as a "crystallite". The maximum Feret diameter of the crystallite is determined, and this is regarded as the "crystallite diameter". If the Li-containing oxide consists of a single crystal, the particle itself can be considered a crystallite, and the maximum Feret diameter of the particle is the "crystallite diameter". Alternatively, the crystallite diameter can be determined with EBSD or XRD. For example, the crystallite diameter can be determined based on the Scherrer equation from the half-width of the diffraction line of the XRD pattern. In the Li-containing oxide, when the crystallite diameter specified by any of the methods is less than 1 µm, higher performance is easily obtained. A crystallite constituting the Li-containing oxide may have a first surface exposed on the surface of the oxide, and the first surface may be planar. Specifically, the surface of the Li-containing oxide may have a structure in which a plurality of planes are connected. As described below, when manufacturing a Na-containing oxide as a raw material of the Li-containing oxide, crystallites having a planar first surface are easily obtained by growing crystallites on a surface of a particle until one crystallite and another crystallite are connected to one another.

### 1.2 Chemical composition

The Li-containing oxide according to one embodiment may comprise, as constituent elements, at least one element among Mn, Ni, and Co; Li; and O. In the Li-containing oxide, particularly when at least Li, Mn, one or both of Ni and Co, and O are included as constituent elements, especially when at least Li, Mn, Ni, Co, and O are included as constituent elements, higher performance is easily obtained.

In one embodiment, the Li-containing oxide having an O2-type structure may have a chemical composition represented by LiₐNabMnₓ₋ₚNi_{y-q}Co_{z-r}M_{p+q+r}O₂ (where 0 < a ≤ 1.00; 0 ≤ b ≤ 0.20; x + y + z = 1; and 0 ≤ p + q + r < 0.17, and the element M is at least one selected from B, Mg, Al, K, Ca, Ti, V, Cr, Fe, Cu, Zn, Ga, Ge, Sr, Y, Zr, Nb, Mo, and W). When the Li-containing oxide has such a chemical composition, an O2-type structure is easily maintained. In the chemical composition above, a is greater than 0 and may be 0.10 or greater, 0.20 or greater, 0.30 or greater, 0.40 or greater, 0.50 or greater, or 0.60 or greater, and is 1.00 or less and may be 0.90 or less, 0.80 or less, or 0.70 or less. In the chemical composition above, b may be 0 or greater, 0.01 or greater, 0.02 or greater, or 0.03 or greater, and may be 0.20 or less, 0.15 or less, or 0.10 or less. In addition, x is 0 or greater and may be 0.10 or greater, 0.20 or greater, 0.30 or greater, 0.40 or greater, or 0.50 or greater, and is 1.00 or less and may be 0.90 or less, 0.80 or less, 0.70 or less, 0.60 or less, or 0.50 or less. Further, y is 0 or greater and may be 0.10 or greater, or 0.20 or greater, and is 1.00 or less and may be 0.90 or less, 0.80 or less, 0.70 or less, 0.60 or less, 0.50 or less, 0.40 or less, 0.30 or less, or 0.20 or less. Moreover, z is 0 or greater and may be 0.10 or greater, 0.20 or greater, or 0.30 or greater, and is 1.00 or less and may be 0.90 or less, 0.80 or less, 0.70 or less, 0.60 or less, 0.50 or less, 0.40 or less, or 0.30 or less. The element M has a small contribution towards charging and discharging. In this regard, in the above chemical composition, by having p + q + r less than 0.17, high charging and discharging capacities are easily ensured. p + q + r may be 0.16 or less, 0.15 or less, 0.14 or less, 0.13 or less, 0.12 or less, 0.11 or less, or 0.10 or less. By including the element M, an O2-type structure is easily stabilized. In the above chemical composition, p + q + r is 0 or greater, and may be 0.01 or greater, 0.02 or greater, 0.03 or greater, 0.04 or greater, 0.05 or greater, 0.06 or greater, 0.07 or greater, 0.08 or greater, 0.09 or greater, or 0.10 or greater. The composition of O is approximately 2, but may be variable without being limited to exactly 2.0.

### 1.3 Shape

As described below, the Li-containing oxide having an O2-type structure can be obtained by substituting Na in a Na-containing oxide having a P2-type structure with Li. The P2-type structure has a hexagonal crystal and a large Na-ion diffusion coefficient, and crystals are easily grown in a specific direction. Particularly, when a transition metal element constituting the P2-type structure includes at least one of Mn, Ni, and Co, tabular crystals are grown easily in a specific direction. Therefore, a Na-containing oxide having a P2-type structure generally forms into a tabular particle having a large aspect ratio, wherein crystal growth direction is biased in a specific direction. The Li-containing oxide according to one embodiment may be obtained based on such a tabular Na-containing oxide particle, or as described below, may be obtained based on a spherical Na-containing oxide particle. Specifically, the shape of the Li-containing oxide may be that of a tabular particle, or may be that of a spherical particle. When the Li-containing oxide is a spherical particle, reaction resistance is decreased due to the decrease in crystallite size, and diffusion resistance inside the particle is easily decreased. Further, when applied to a secondary battery, it is considered that the degree of curvature is decreased by spheroidization, and lithium-ion conduction resistance is decreased. As a result, for example, rate characteristics are improved and reversible capacity is easily increased. A "spherical particle" in the present application means a particle having a roundness of 0.80 or greater. The roundness of the spherical particle may be 0.81 or greater, 0.82 or greater, 0.83 or greater, 0.84 or greater, 0.85 or greater, 0.86 or greater, 0.87 or greater, 0.88 or greater, 0.89 or greater, or 0.90 or greater. The roundness of a particle is defined as 4πS/L², where S is the orthographic area of the particle and L is the circumference of an orthographic image of the particle. The roundness of a particle can be determined by observing the exterior of the particle with a scanning electron microscope (SEM), a transmission electron microscope (TEM), or an optical microscope. In the case where the oxide consists of more than 100 particles, the roundness thereof is measured as an average value, for example, as follows.
(1) The particle distribution of the particles is first measured. Specifically, a 10% cumulative particle size (D10) and a 90% cumulative particle size (D90) in a volume-based particle size distribution are determined by a laser diffraction/scattering method.
(2) Image observation of the exterior of the particles measured for particle distribution is carried out with a SEM, TEM, or optical microscope, and of the particles contained in the image, 100 particles having an equivalent circle diameter (diameter of a circle having the same area as the orthographic area of the particles) of D10 or more and D90 or less, which are determined in (1), are arbitrarily extracted.
(3) The roundness of each of the extracted particles is determined by image processing, and the average value thereof is regarding as the "roundness of the particles".

The Li-containing oxide according to one embodiment may be a solid particle, may be a hollow particle, or may be a particle having a void. The size of the Li-containing oxide particle is not particularly limited. However, a smaller size is considered advantageous. For example, the average particle size (D50) of the Li-containing oxide particles may be 0.1 µm or more and 10 µm or less, 1.0 µm or more and 8.0 µm or less, or 2.0 µm or more and 6.0 µm or less. The average particle size (D50) is the 50% cumulative particle size (D50, median diameter) in a volume-based particle size distribution determined by a laser diffraction/scattering method.

### 1.4 Others

As described above, the positive electrode active material according to the embodiments has a large capacity by comprising the above specific Li-containing oxide. The positive electrode active material according to the embodiments may consist only of the above Li-containing oxide, or may comprise the above Li-containing oxide and another positive electrode active material (additional positive electrode active material). From the viewpoint of further increasing the above effect, the proportion of the additional positive electrode active material to the entire positive electrode active material may be a small amount. For example, when the entirety of the positive electrode active material is 100% by mass, the content of the above Li-containing oxide may be 50% by mass or more and 100% by mass or less, 60% by mass or more and 100% by mass or less, 70% by mass or more and 100% by mass or less, 80% by mass or more and 100% by mass or less, 90% by mass or more and 100% by mass or less, 95% by mass or more and 100% by mass or less, or 99% by mass or more and 100% by mass or less.

### 2. Manufacturing method for positive electrode active material

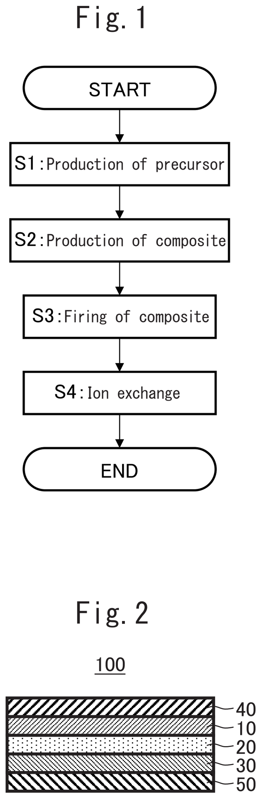

The Li-containing oxide according to the above embodiment can be manufactured, for example, by the following method. As shown in FIG. 1, the manufacturing method for the Li-containing oxide having an O2-type structure according to one embodiment comprises
S1: obtaining a precursor comprising at least one element among Mn, Ni, and Co,
S2: covering a surface of the precursor with a Na source to obtain a composite,
S3: firing the composite to obtain a Na-containing oxide having a P2-type structure, and
S4: subjecting at least a portion of Na in the Na-containing oxide to ion exchange with Li to obtain a Li-containing oxide having an O2-type structure. The S3 comprises
S3-1: subjecting the composite to a pre-firing at a temperature of 300°C or higher and lower than 700°C for 2 h or more and 10 h or less,
S3-2: following the pre-firing, subjecting the composite to a main firing at a temperature of 700°C or higher and 1100°C or lower for 30 min or more and 48 h or less, and
S3-3: following the main firing, rapidly cooling the composite from a temperature T₁ of 200°C or higher to a temperature T2 of 100°C or lower.

### 2.1 S1

In S1, a precursor comprising at least one element among Mn, Ni, and Co is obtained. The precursor may comprise at least Mn and one or both of Ni and Co, or may comprise at least Mn, Ni, and Co. The precursor may be a salt comprising at least one element among Mn, Ni, and Co. For example, the precursor may be at least one of a carbonate, a sulfate, a nitrate, and an acetate. Alternatively, the precursor may be a compound other than a salt. For example, the precursor may be a hydroxide. The precursor may be a hydrate. The precursor may be a combination of a plurality of compounds. The precursor may have various shapes. For example, the precursor may be particulate, and may consist of spherical particles as described below. The particle size of the particles composed of the precursor is not particularly limited.

In S1, a precipitate of the precursor above may be obtained by a coprecipitation method using an ion source that can form a precipitation with a transition metal ion in an aqueous solution and a transition metal compound comprising at least one element among Mn, Ni, and Co. As a result, spherical particles of the precursor are easily obtained. An "ion source that can form a precipitation with a transition metal ion in an aqueous solution", for example, may be at least one selected from sodium salts such as sodium carbonate and sodium nitrate, sodium hydroxide, and sodium oxide. The transition metal compound may be a salt or hydroxide described above comprising at least one element among Mn, Ni, and Co. Specifically, in S1, the ion source and the transition metal compound may each be formed into a solution, and the solutions may then be dropped and mixed to obtain a precipitate of the precursor. In this case, for example, water is used as a solvent. In this case, various sodium compounds may be used as a base, and an ammonia aqueous solution may be added to adjust basicity. In the case of a coprecipitation method, the precipitate of the precursor is obtained, for example, by preparing an aqueous solution of a transition metal compound and an aqueous solution of sodium carbonate and dropping to mix the aqueous solutions. Alternatively, it is possible to obtain the precursor by a sol-gel method. Particularly, according to the coprecipitation method, spherical particles of the precursor are easily obtained.

In S1, the precursor may comprise an element M. The element M is at least one selected from B, Mg, Al, K, Ca, Ti, V, Cr, Cu, Zn, Ga, Ge, Sr Y, Zr, Nb, Mo, and W. These elements M, for example, have a function of stabilizing a P2-type structure and an O2-type structure. The method of obtaining the precursor comprising an element M is not particularly limited. When the precursor is obtained by a coprecipitation method in S1, for example, an aqueous solution of a transition metal compound comprising at least one of Mn, Ni, and Co, an aqueous solution of sodium carbonate, and an aqueous solution of a compound of the element M are prepared, the aqueous solutions are each dropped and mixed, whereby a precursor comprising at least one element among Mn, Ni, and Co and the element M is obtained. Alternatively, in the manufacturing method of the present disclosure, the element M is not added in S1, and the element M may be doped when carrying out the Na-doping and firing in S2 and S3 described below.

### 2.2 S2

In S2, the surface of the precursor obtained via S1 is covered with a Na source to obtain a composite. The Na source may be a salt comprising Na, such as a carbonate or a nitrate, or may be a compound other than a salt, such as sodium oxide or sodium hydroxide. In S2, the amount of the Na source for covering the surface of the precursor may be determined by taking into account the amount of Na lost during subsequent firing.

In S2, the coverage of the Na source relative to the surface of the precursor is not particularly limited. For example, in S2, the above composite may be obtained by covering 40% by area or more, 50% by area or more, 60% by area or more, or 70% by area or more of the surfaces of the above precursor with a Na source. When the precursor obtained via S1 consists of spherical particles, and the composite obtained via S2 are obtained by covering 40% by area or more of the surface of the precursor with the Na source, a Na-containing oxide having a P2-type structure tends to form spherical particles in S3 described below. When the coverage of the Na source is small, P2-type crystals tend to grow on the surface of the composite when the composite is fired, and the Na-containing oxide tends to form tabular particles. When the coverage of the Na source is large, crystallites of P2-type crystals tend to be small when the composite is fired, and the Na-containing oxide tends to form spherical particles, which correspond to the shape of the precursor.

In S2, the method of covering the surface of the precursor with a Na source is not particularly limited. As described above, when covering 40% by area or more of the surface of the precursor with a Na source, the method includes various methods. Examples include a rolling fluidized coating method or a spray drying method. Specifically, a coating solution in which a Na source is dissolved is prepared, the coating solution is brought into contact with the surface of the precursor, and is simultaneously or subsequently dried. By adjusting the conditions (such as temperature, time, and count) of coating, for example, 40% by area or more of the surface of the precursor can be covered with a Na source.

In S2, the precursor may be covered with a Na source and an M source. For example, in S2, the precursor obtained via S1, a Na source, and an M source comprising at least one element M selected from B, Mg, Al, K, Ca, Ti, V, Cr, Cu, Zn, Ga, Ge, Sr, Y, Zr, Nb, Mo, and W may be mixed to obtain a composite. The M source, for example, may be a salt comprising an element M, such as a carbonate or a sulfate, or may be a compound other than a salt, such as an oxide or a hydroxide. The amount of the M source relative to the precursor is determined in accordance with the chemical composition of the Na-containing oxide after firing.

### 2.3 S3

In S3, the composite obtained via S2 is fired to obtain a Na-containing oxide having a P2-type structure. S3 comprises the above S3-1, S3-2, and S3-3.

### 2.3.1 S3-1

In S3-1, the composite is subjected to a pre-firing at a temperature of 300°C or higher and lower than 700°C for 2 h or more and 10 h or less. In S3-1, the pre-firing may be carried out after optionally molding the above composite. The pre-firing is carried out at a temperature lower than that of main firing. When the pre-firing in S3-1 is insufficient, the formation of a P2 phase may be insufficient in the resulting Na-containing oxide in the end. By setting the pre-firing temperature to 300°C or higher and lower than 700°C and the pre-firing time to 2 h or more and 10 h or less in S3-1, the composite can be subjected to a sufficient pre-firing, heat uniformity is improved, the Na-containing oxide obtained via S3-2 and S3-3 described below is appropriately formed, and the Li-containing oxide having an O2-type structure obtained via S4 tends to satisfy the above I₁/I₂. The pre-firing temperature may be 400°C or higher and lower than 700°C, 450°C or higher and lower than 700°C, 500°C or higher and lower than 700°C, 550°C or higher and lower than 700°C, or 550°C or higher and 650°C or lower. The pre-firing time may be 2 h or more and 8 h or less, 3 h or more and 8 h or less, 4 h or more and 8 h or less, 5 h or more and 8 h or less, or 5 h or more and 7 h or less. The pre-firing atmosphere is not particularly limited, and for example, may be an oxygen-containing atmosphere.

### 2.3.2 S3-2

In S3-2, following the above pre-firing, the composite is subjected to a main firing at a temperature of 700°C or higher and 1100°C or lower for 30 min or more and 10 h or less. In S3-2, the main firing temperature of the composite is 700°C or higher and 1100°C or lower, and is preferably 800°C or higher and 1000°C or lower. When the main firing temperature is too low, a P2 phase is not formed, and when the main firing temperature is too high, an O3 phase, not a P2 phase, is easily formed. The heating conditions from the pre-firing temperature to the main firing temperature is not particularly limited. The main firing time is not particularly limited, and for example, may be 30 min or more and 48 h or less. The shape of the Na-containing oxide can be controlled by the main firing time. As described above, when the coverage of the Na source on the composite is 40% by area or more in the method of the present disclosure, P2-type crystals having small crystallites are easily formed when the composite is fired. In the method of the present disclosure, by connecting one P2-type crystallite and another P2-type crystallite to one another and growing the P2-type crystals along the surface of a particle, the shape of the Na-containing oxide corresponds to the shape of the precursor. For example, when the precursor consists of spherical particles, the Na-containing oxide can also form spherical particles. When the main firing time is too short, formation of the P2 phase is insufficient. When the main firing time is too long, the P2 phase is excessively grown, and tabular particles, not spherical particles, are formed. As far as the present inventors have confirmed, when the main firing time is 30 min or more and 3 h or less, spherical particles of the Na-containing oxide are easily obtained. The resulting Na-containing oxide after the main firing may have a plurality of crystallites present on the surface thereof and may have a structure in which crystallites are connected.

### 2.3.3 S3-3

In S3-3, following the above main firing, the composite undergoes rapid cooling (cooled at a cooling rate of 20°C/min or higher) from a temperature T₁ of 200°C or higher to a temperature T2 of 100°C or lower. The above pre-firing and main firing are carried out, for example, in a heating furnace. In step S3-3, for example, the composite is subjected to a main firing in a heating furnace and then cooled to an arbitrary temperature T1 of 200°C or higher in the heating furnace, and after reaching the temperature T1, the fired product is removed from the heating furnace and undergoes rapid cooling outside the furnace to an arbitrary temperature T2 of 100°C or lower. The temperature T1 is an arbitrary temperature of 200°C or higher, and may be an arbitrary temperature of 250°C or higher. The temperature T2 is an arbitrary temperature of 100°C or lower, and may be an arbitrary temperature of 50°C or lower or may be the cooling end temperature. In a predetermined temperature range from the temperature T1 until reaching the temperature T2, moisture easily infiltrates between layers of a P2-type structure by atomic vibrations or molecular motion. When cooling the composite (Na-containing oxide having a P2-type structure) after main firing, by shortening the time in the temperature range in which such moisture easily infiltrates (i.e., rapid cooling), it is considered that the infiltration amount of moisture between layers of the P2-type structure is decreased. In step S3-3, when cooling the composite after the main firing, by leaving the composite to cool from an arbitrary temperature T1 of 200°C or higher until reaching an arbitrary temperature T2 of 100°C or lower, for example, in a dry atmosphere outside the furnace, the cooling rate from the temperature T1 to the temperature T2 is rapid (for example, 20°C/min or higher), moisture does not easily infiltrate between layers of the P2-type structure, and collapse of the P2-type structure can be inhibited. As a result, Na can efficiently undergo ion exchange with Li in S4, and the Li-containing oxide having an O2-type structure obtained via S4 tends to satisfy the above I1/I2.

According to the above method, a Na-containing oxide having a P2-type structure and a predetermined chemical composition can be manufactured. The Na-containing oxide comprises, as constituent elements, at least one transition metal element among Mn, Ni, and Co; Na; and O. Particularly, when the constituent elements at least include Na, Mn, at least one of Ni and Co, and O, especially when the constituent elements include at least Na, Mn, Ni, Co, and O, performance of the positive electrode active material particles tends to further increase. The Na-containing oxide may have a chemical composition represented by Na_{c}Mnₓ₋ₚNi_{y-q}Co_{z-r}M_{p+q+r}O₂, where 0 < c ≤ 1.00, x + y + z = 1, and 0 ≤ p + q + r < 0.17. In addition, M is at least one element selected from B, Mg, Al, K, Ca, Ti, V, Cr, Fe, Cu, Zn, Ga, Ge, Sr, Y, Zr, Nb, Mo, and W. When the Na-containing oxide has such a chemical composition, a P2-type structure is more easily maintained. In the above chemical composition, c may be greater than 0, 0.10 or greater, 0.20 or greater, 0.30 or greater, 0.40 or greater, 0.50 or greater, or 0.60 or greater, and may be 1.00 or less, 0.90 or less, 0.80 or less, or 0.70 or less. x is 0 or greater and may be 0.10 or greater, 0.20 or greater, 0.30 or greater, 0.40 or greater, or 0.50 or greater, and is 1.00 or less and may be 0.90 or less, 0.80 or less, 0.70 or less, 0.60 or less, or 0.50 or less. y is 0 or greater and may be 0.10 or greater, or 0.20 or greater, and is 1.00 or less and may be 0.90 or less, 0.80 or less, 0.70 or less, 0.60 or less, 0.50 or less, 0.40 or less, 0.30 or less, or 0.20 or less. z is 0 or greater and may be 0.10 or greater, 0.20 or greater, or 0.30 or greater, and is 1.00 or less and may be 0.90 or less, 0.80 or less, 0.70 or less, 0.60 or less, 0.50 or less, 0.40 or less, or 0.30 or less. The element M has a small contribution towards charging and discharging. In this regard, in the above chemical composition, by having p + q + r less than 0.17, high charging and discharging capacities are easily ensured. p + q + r may be 0.16 or less, 0.15 or less, 0.14 or less, 0.13 or less, 0.12 or less, 0.11 or less, or 0.10 or less. By including the element M, P2-type and O2-type structures are easily stabilized. In the above chemical composition, p + q + r is 0 or greater, and may be 0.01 or greater, 0.02 or greater, 0.03 or greater, 0.04 or greater, 0.05 or greater, 0.06 or greater, 0.07 or greater, 0.08 or greater, 0.09 or greater, or 0.10 or greater. The composition of O is approximately 2, but may be variable without being limited to exactly 2.0.

### 2.4 S4

In S4, at least a portion of Na in the Na-containing oxide obtained via S3 is subjected to ion exchange with Li to obtain a Li-containing oxide having an O2-type structure. The ion exchange includes, for example, a method using an aqueous solution comprising a lithium halide and a method using a mixture (for example, a molten salt) of a lithium halide and another lithium salt. From the viewpoint that a P2-type structure is easily destroyed by water infiltration and the viewpoint of crystallinity, of the above two methods, a method using a molten salt is preferable. Specifically, the above Na-containing oxide having a P2-type structure and the molten salt are mixed and heated to a temperature of the melting point of the molten salt or higher, whereby at least a portion of Na in the Na-containing oxide can be substituted with Li by ion exchange.

The lithium halide constituting the molten salt is preferably at least one of lithium chloride, lithium bromide, and lithium iodide. An additional lithium salt constituting the molten salt is preferably lithium nitrate. By using a molten salt, the melting point is lowered compared to when the lithium halide and the additional lithium salt are used independently, and ion exchange at a lower temperature is possible.

The temperature of the ion exchange, for example, may be the melting point of the above molten salt or higher and 600°C or lower, 500°C or lower, 400°C or lower, or 300°C or lower. When the temperature of the ion exchange is too high, an O3-type structure, which is a stable phase, not an O2-type structure, is easily formed. From the viewpoint of shortening the time required for the ion exchange, the temperature of the ion exchange is preferably as high as possible.

### 3. Lithium-ion secondary battery

The positive electrode active material according to the embodiments comprises the above specific Li-containing oxide. The positive electrode active material according to the embodiments, for example, can be used as a positive electrode active material for lithium-ion secondary batteries. FIG. 2 schematically shows the configuration of a lithium-ion secondary battery according to one embodiment. As shown in FIG. 2, the lithium-ion secondary battery 100 according to one embodiment comprises a positive electrode active material layer 10, an electrolyte layer 20, and a negative electrode active material layer 30. The positive electrode active material layer 10 comprises the positive electrode active material according to the above embodiment.

### 3.1 Positive electrode active material layer

The positive electrode active material layer 10 comprises at least the above positive electrode active material according to the embodiments, and may further optionally comprise an electrolyte, a conductive aid, and a binder. Further, the positive electrode active material layer 10 may additionally comprise various additives. The contents of the positive electrode active material, electrolyte, conductive aid, and binder in the positive electrode active material layer 10 need only to be appropriately determined in accordance with the target battery performance. For example, when the entirety (entire solid content) of the positive electrode active material layer 10 is 100% by mass, the content of the positive electrode active material may be 40% by mass or more, 50% by mass or more, or 60% by mass or more, and may be 100% by mass or less or 90% by mass or less. The shape of the positive electrode active material layer 10 is not particularly limited, and for example, may be a sheet-like positive electrode active material layer 10 having a substantially flat surface. The thickness of the positive electrode active material layer 10 is not particularly limited, and for example, may be 0.1 µm or more or 1 µm or more, and may be 2 mm or less or 1 mm or less.

### 3.1.1 Positive electrode active material

The positive electrode active material is as described above. Specifically, the positive electrode active material comprises a Li-containing oxide, and the Li-containing oxide has an O2-type structure, at least comprises, as constituent elements, at least one element among Mn, Ni, and Co; Li; and O, and satisfies the relationship according to I₁/I₂. As described above, the positive electrode active material may consist only of the above Li-containing oxide, or may comprise the above Li-containing oxide and another positive electrode active material (an additional positive electrode active material). From the viewpoint of further enhancing the effect according to the technique of the present disclosure, the ratio of the additional positive electrode active material to the entirety of the positive electrode active materials may be small. For example, when the entirety of the positive electrode active materials is 100% by mass, the content of the above Li-containing oxide is 50% by mass or more and 100% by mass or less, 60% by mass or more and 100% by mass or less, 70% by mass or more and 100% by mass or less, 80% by mass or more and 100% by mass or less, 90% by mass or more and 100% by mass or less, 95% by mass or more and 100% by mass or less, or 99% by mass or more and 100% by mass or less.

Any known positive electrode active material for lithium-ion secondary batteries can be adopted as an additional positive electrode active material. The additional positive electrode active material, for example, may be at least one selected from various lithium-containing compounds other than the above Li-containing oxide, elemental sulfur, and sulfur compounds. The lithium-containing compound as the additional positive electrode active material may be a Li-containing oxide comprising at least one element M; Li; and O. The element M, for example, may be at least one selected from Mn, Ni, Co, Al, Mg, Ca, Sc, V, Cr, Cu, Zn, Ga, Ge, Y, Zr, Sn, Sb, W, Pb, Bi, Fe, and Ti, or may be at least one selected from the group consisting of Mn, Ni, Co, Al, Fe, and Ti. More specifically, the Li-containing oxide as the additional positive electrode active material may be at least one selected from lithium cobaltate, lithium nickelate, lithium manganate, lithium nickel cobaltate, lithium nickel manganate, lithium cobalt manganate, lithium nickel-cobalt-manganese oxide (Li_{1+α}NiₓCo_{y}Mn_{z}O_{2+δ} (for example, 0 < x < 1, 0 < y < 1, 0 < z < 1, and x + y + z = 1)), spinel-based lithium compounds (heteroelement-substituted Li-Mn spinels having a composition represented by Li₁₊ₓMn_{2-x-y}M_{y}O₄ (M is one or more selected from Al, Mg, Co, Fe, Ni, and Zn)), lithium nickel-cobalt-aluminum oxide (for example, Li_{1±α}NiₚCo_{q}AlᵣO_{2±δ} (for example, p + q + r = 1)), lithium titanate, and lithium metal phosphate (such as LiMPO4; M is one or more selected from Fe, Mn, Co, and Ni). Particularly, when the additional positive electrode active material comprises a Li-containing oxide that at least comprises, as constituent elements, at least one of Ni, Co, and Mn; Li; and O, performance of the secondary battery tends to be further improved. Alternatively, when the additional positive electrode active material comprises a Li-containing oxide that at least comprises, as constituent elements, at least one of Ni, Co, and Al; Li; and O, performance of the secondary battery tends to be further improved. The additional positive electrode active material may be of one type used alone, or may be of two or more types used in combination. The shape of the additional positive electrode active material needs only to be any general shape of positive electrode active materials of secondary batteries. The additional positive electrode active material, for example, may be particulate. The additional positive electrode active material may be solid, or may have voids therein, for example, may be porous or hollow. The additional positive electrode active material may be of primary particles, or may be of secondary particles of a plurality of agglomerated primary particles. The average particle diameter D50 of the additional positive electrode active material, for example, may be 1 nm or more, 5 nm or more, or 10 nm or more, and may be 500 µm or less, 100 µm or less, 50 µm or less, or 30 µm or less.

### 3.1.2 Protective layer

A protective layer having ion-conducting properties may be formed on the surface of the positive electrode active material. Specifically, the positive electrode active material layer 10 may comprise a composite of a positive electrode active material and a protective layer, and at least a portion of the surface of the positive electrode active material of the composite may be covered by the protective layer. As a result, for example, a reaction between the positive electrode active material and another battery material (such as the sulfide solid electrolyte described below) is easily suppressed. The protective layer having ion-conducting properties can comprise various ion-conducting compounds. The ion-conducting compound, for example, may be at least one selected from ion-conducting oxides and ion-conducting halides.

The ion-conducting oxide, for example, may comprise at least one element selected from B, C, Al, Si, P, S, Ti, La, Zr, Nb, Mo, Zn, and W; Li; and O. The ion-conducting oxide may be an oxynitride comprising N. More specifically, the ion-conducting oxide may be at least one selected from L1₃BO₃, LiBO2, Li2CO3, LiAlO2, Li₄SiO₄, Li2SiO3, Li3PO4, Li₂SO₄, Li₂TiO₃, Li₄Ti₅O₁₂, Li₂Ti₂O₅, Li2ZrO3, LiNbO3, Li₂MoO₄, Li2WO4, LiPON, Li₂O-LaO₂, and Li₂O-ZnO₂. The ion-conducting oxide may have a portion of elements substituted by various doping elements.

The ion-conducting halide, for example, may be at least one of various compounds exemplified as a halide solid electrolyte described below. The halide having ion-conducting properties, for example, may comprise at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm; at least one halogen element selected from the group consisting of Cl, Br, I, and F; and Li. The halide having ion-conducting properties may comprise at least one selected from the group consisting of Ti, Al, Gd, Ca, Zr, and Y; at least one selected from the group consisting of Cl, Br, I, and F; and Li. The halide having ion-conducting properties may comprise at least one element selected from the group consisting of Ti and Al; at least one element selected from the group consisting of Cl, Br, I, and F; and Li. The halide having ion-conducting properties, for example, may be a complex halide of Li, Ti, Al, and F.

The coverage (area ratio) of the protective layer relative to the surface of the positive electrode active material, for example, may be 70% or more, may be 80% or more, or may be 90% or more. The thickness of the protective layer, for example, may be 0.1 nm or more or 1 nm or more, and may be 100 nm or less or 20 nm or less.

### 3.1.2 Electrolyte

The positive electrode active material layer 10 can comprise an electrolyte. The electrolyte that can be contained in the positive electrode active material layer 10 may be a solid electrolyte, may be a liquid electrolyte, and may be a combination thereof.

### 3.1.2.1 Solid electrolyte

Any solid electrolyte may be used as long as the solid electrolyte is known as a solid electrolyte for lithium-ion secondary batteries . The solid electrolyte may be an inorganic solid electrolyte or an organic polymer electrolyte. Particularly, an inorganic solid electrolyte has excellent ion-conducting properties and heat resistance. Examples of the inorganic solid electrolyte include oxide solid electrolytes, sulfide solid electrolytes, and inorganic solid electrolytes having ion-binding properties. Among the inorganic solid electrolytes, the performance of sulfide solid electrolytes, particularly sulfide solid electrolytes comprising at least Li, S, and P as constituent elements, is high. Alternatively, among the inorganic solid electrolytes, the performance of solid electrolytes having ion-binding properties, particularly solid electrolytes comprising at least Li, Y, and a halogen (at least one of Cl, Br, I, and F) as constituent elements, is high. The solid electrolyte may be amorphous, or may be crystalline. The solid electrolyte may be particulate. The average particle diameter (D50) of the solid electrolyte, for example, may be 10 nm or more and 10 µm or less. The ion conductivity of the solid electrolyte at 25°C, for example, may be 1 × 10⁻⁵ S/cm or more, 1 × 10⁻⁴ S/cm or more, or 1 × 10⁻³ S/cm or more. The solid electrolyte may be of one type used alone, or may be of two or more types used in combination.

The oxide solid electrolyte may be one or more selected from lithium lanthanum zirconate, LiPON, Li₁₊ₓAlₓGe₂₋ₓ(PO₄)₃, Li-SiO-based glass, and Li-Al-S-O-based glass. When an oxide solid electrolyte and a liquid electrolyte are combined, ion-conducting properties can be improved.

The sulfide solid electrolyte may be a glass-based sulfide solid electrolyte (sulfide glass), may be a glass-ceramic-based sulfide solid electrolyte, or may be a crystal-based sulfide solid electrolyte. The sulfide glass is amorphous. The sulfide glass may have a glass transition temperature (Tg). When the sulfide solid electrolyte has a crystal phase, examples of the crystal phase include Thio-LISICON-type crystal phase, LGPS-type crystal phase, and argyrodite-type crystal phase. The sulfide solid electrolyte may be particulate. The average particle diameter (D50) of the sulfide solid electrolyte, for example, may be 10 nm or more and 100 µm or less.

The sulfide solid electrolyte, for example, may contain Li element, an X element (X is at least one of P, As, Sb, Si, Ge, Sn, B, Al, Ga, and In), and S element. In addition, the sulfide solid electrolyte may further contain at least one of O element and a halogen element. Further, the sulfide solid electrolyte may contain S element as an anionic element main component.

The sulfide solid electrolyte, for example, may be at least one selected from Li2S-P2S5, Li2S-P2S5-LiI, Li2S-P2S5-GeS2, Li₂S-P₂S₅-Li₂O, Li₂S-P₂S₅-Li₂O-LiI, Li₂S-P₂S₅-LiI-LiBr, Li2S-SiS2, Li2S-SiS2-LiI, Li₂S-SiS₂-LiBr, Li₂S-SiS₂-LiCl, Li₂S-SiS₂-B₂S₃-LiI, Li2S-SiS2-P2S5-Lil, Li2S-B2S3, Li2S-P2S5-ZmSn (where m and n are positive numbers, and Z is any of Ge, Zn, and Ga), Li2S-GeS2, Li₂S-SiS₂-Li₃PO4, and Li₂S-SiS₂-LiₓMO_{y} (where x and y are positive numbers, and M is any of P, Si, Ge, B, Al, Ga, and In).

The composition of the sulfide solid electrolyte is not particularly limited. Examples thereof include xLi₂S·(100 - x)P2S5 (70 ≤ x ≤ 80) and yLil·zLiBr·(100 - y - z)(xLi₂S·(1 - x)P₂S₅) (0.7 ≤ x ≤ 0.8, 0 ≤ y ≤ 30, and 0 ≤ z ≤ 30). Alternatively, the sulfide solid electrolyte may have a composition represented by general formula: Li₄-xGe₁₋ₓPₓS₄ (0 < x < 1). In the above general formula, at least a portion of Ge may be substituted with at least one of Sb, Si, Sn, B, Al, Ga, In, Ti, Zr, V, and Nb. In the above general formula, at least a portion of P may be substituted with at least one of Sb, Si, Sn, B, Al, Ga, In, Ti, Zr, V, and Nb. In the above general formula, a portion of Li may be substituted with at least one of Na, K, Mg, Ca, and Zn. In the above general formula, a portion of S may be substituted with a halogen (at least one of F, Cl, Br, and I). Alternatively, the sulfide solid electrolyte may have a composition represented by Li₇₋ₐPS₆₋ₐXₐ (X is at least one of Cl, Br, and I, and a is a number of 0 or greater and 2 or less). a may be 0 or may be greater than 0. In the latter case, a may be 0.1 or greater, may be 0.5 or greater, or may be 1 or greater. a may be 1.8 or less, or may be 1.5 or less.

The solid electrolyte having ion-binding properties, for example, may comprise at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm. These elements can generate cations in water. The ion-binding solid electrolyte material, for example, may comprise at least one halogen element selected from the group consisting of Cl, Br, I, and F. These elements can generate anions in water. The solid electrolyte having ion-binding properties may comprise at least one selected from the group consisting of Gd, Ca, Zr, and Y, at least one selected from the group consisting of Cl, Br, I, and F, and Li. The solid electrolyte having ion-binding properties comprises Li and Y, and may comprise at least one selected from the group consisting of Cl, Br, I, and F. More specifically, the solid electrolyte having ion-binding properties may comprise Li, Y, Cl, and Br, may comprise Li, Ca, Y, Gd, Cl, and Br, or may comprise Li, Zr, Y, and Cl. Even more specifically, the solid electrolyte having ion-binding properties may be at least one of Li₃YBr₂Cl₄, Li_{2.8}Ca_{0.1}Y_{0.5}Gd_{0.5}Br₂Cl₄, and Li_{2.5}Y_{0.5}Zr_{0.5}Cl₆.

The solid electrolyte having ion-binding properties may be a halide solid electrolyte. A halide solid electrolyte has excellent ion-conducting properties. The halide solid electrolyte may have a composition represented, for example, by formula (A):

Li_{α}M_{β}X_{γ} ... (A)

where α, β, and γ are each independently a value greater than 0, M is at least one selected from the group consisting of metal elements other than Li and semimetal elements, and X is at least one selected from the group consisting of Cl, Br, and I. Note that a "semimetal element" may be at least one selected from the group consisting of B, Si, Ge, As, Sb, and Te. Further, a "metal element" may include (i) all of the elements contained from Group 1 to Group 12 of the periodic table (excluding hydrogen) and (ii) all of the elements contained from Group 13 to Group 16 of the periodic table (excluding B, Si, Ge, As, Sb, Te, C, N, P, O, S, and Se). A metal element can form an inorganic compound with halide ions and form cations.

In the formula (A), M may comprise Y (i.e., yttrium). A halide solid electrolyte comprising Y may have a composition represented by LiₐMe_{b}Y_{c}X₆ (where a + mb + 3c = 6, c > 0, Me is at least one selected from the group consisting of metal elements and semimetal elements other than Li and Y, and m is the valence of Me). Me, for example, may be at least one selected from the group consisting of Mg, Ca, Sr, Ba, Zn, Sc, Al, Ga, Bi, Zr, Hf, Ti, Sn, Ta, and Nb.

The halide solid electrolyte may have a composition represented by formula (A1): Li6-3_{d}Y_{d}X₆. In the formula (A1), X is one or more elements selected from the group consisting of Cl, Br, and I. d may satisfy 0 < d < 2, or may be d = 1. The halide solid electrolyte may have a composition represented by formula (A2): Li_{3-3δ}Y_{1+δ}Cl₆. In the formula (A2), δ may be 0 < δ ≤ 0.15. The halide solid electrolyte may have a composition represented by formula (A3): Li3-_{3δ}Y_{1+δ}Br₆. In the formula (A3), δ may be 0 < δ ≤ 0.25. The halide solid electrolyte may have a composition represented by formula (A4): Li_{3-3δ+a}Y_{1+δ-a}MeₐCl_{6-x-y}BrₓI_{y}. In the formula (A4), Me may be at least one selected from the group consisting of Mg, Ca, Sr, Ba, and Zn. In the formula (A4), for example, -1 < δ < 2, 0 < a < 3, 0 < (3 - 3δ + a), 0 < (1 + δ - a), 0 ≤ x ≤ 6, 0 ≤ y ≤ 6, and (x + y) ≤ 6 are satisfied. The halide solid electrolyte may have a composition represented by formula (A5): Li_{3-3δ}Y_{1+δ-a}MeₐCl_{6-x-y}BrₓI_{y}. In the formula (A5), Me may be at least one selected from the group consisting of Al, Sc, Ga, and Bi. In the formula (A5), the variables may satisfy -1 < δ < 1,0 < a < 2, 0 < (1 + δ - a), 0 ≤ x ≤ 6, 0 ≤ y ≤ 6, and (x + y) ≤ 6. The halide solid electrolyte may have a composition represented by formula (A6): Li_{3-3δ-a}Y_{1+δ-a}MeₐCl_{6-x-y}BrₓI_{y}. In the formula (A6), Me may be at least one selected from the group consisting of Zr, Hf, and Ti. In the formula (A6), the variables may satisfy -1 < δ < 1, 0 < a < 1.5, 0 < (3 - 3δ - a), 0 < (1 + δ - a), 0 ≤ x ≤ 6, 0 ≤ y ≤ 6, and (x + y) ≤ 6. The halide solid electrolyte may have a composition represented by formula (A7): Li_{3-3δ-2a}Y_{1+δ}-ₐMeₐCl_{6-x-y}BrₓI_{y}. In the formula (A7), Me may be at least one selected from the group consisting of Ta and Nb. In the formula (A7), the variables may satisfy -1 < δ < 1, 0 < a < 1.2, 0 < (3 - 3δ - 2a), 0 < (1 + δ - a), 0 ≤ x ≤ 6, 0 ≤ y ≤ 6, and (x + y) ≤ 6.

The solid electrolyte having ion-binding properties may be a complex hydride solid electrolyte. The complex hydride solid electrolyte can be composed of Li ions and complex ions comprising H. The complex ion comprising H, for example, may comprise an element M comprising at least one of nonmetal elements, semimetal elements, and metal elements and H bonded to the element M. In the complex ion comprising H, an element M as a central element and H surrounding the element M may be bonded to one another via a covalent bond. The complex ion comprising H may be represented by (MₘHₙ)^{α-}. In this case, m can be any positive number, and n and α can take on any positive number depending on m and the valence of the element M. The element M needs only to be any nonmetal element or metal element that can form a complex ion. For example, the element M may comprise at least one of B, C, and N as a nonmetal element, or may comprise B. Further, for example, the element M may comprise at least one of Al, Ni, and Fe as a metal element. Particularly, when the complex ion comprises B or comprises C and B, higher ion-conducting properties are easily ensured. Specific examples of the complex ion comprising H include (CB₉H₁₀)⁻, (CB₁₁H₁₂)⁻, (B₁₀H₁₀)²⁻, (B₁₂H₁₂)²⁻, (BH₄)⁻, (NH₂)⁻, (AlH₄)⁻, and combinations thereof. Particularly, when (CB₉H₁₀) , (CB₁₁H₁₂)⁻, or a combination thereof is used, higher ion-conducting properties are easily ensured. Specifically, the complex hydride solid electrolyte may comprise Li, C, B, and H.

### 3.1.2.2 Liquid electrolyte

The liquid electrolyte (electrolytic solution) is a liquid comprising lithium ions as carrier ions. The electrolytic solution may be a water-based electrolytic solution or a non-water-based electrolytic solution. The composition of the electrolytic solution needs only to be the same as any known composition of an electrolytic solution for lithium-ion secondary batteries. The electrolytic solution may be water or a non-water-based solvent dissolving a lithium salt. Examples of the non-water-based solvent include various carbonate-based solvents. Examples of the lithium salt include lithium amide and LiPF6.

### 3.1.3 Conductive aid

Examples of the conductive aid that can be contained in the positive electrode active material layer 10 include carbon materials such as vapor-grown carbon fiber (VGCF), acetylene black (AB), Ketjenblack (KB), carbon nanotube (CNT), and carbon nanofiber (CNF); and metal materials such as nickel, titanium, aluminum, and stainless steel. The conductive aid, for example, may be particulate or fibrous, and the size thereof is not particularly limited. The conductive aid may be of one type used alone, or may be of two or more types used in combination.

### 3.1.4 Binder

Examples of the binder that can be contained in the positive electrode active material layer 10 include butadiene rubber (BR)-based binders, butylene rubber (IIR)-based binders, acrylatebutadiene rubber (ABR)-based binders, styrene-butadiene rubber (SBR)-based binders, polyvinylidene fluoride (PVdF)-based binders, polytetrafluoroethylene (PTFE)-based binders, and polyimide (PI)-based binders. The binder may be of one type used alone, or may be of two or more types used in combination.

### 3.1.5 Others

The positive electrode active material layer 10 may comprise various additives, in addition to the above components, for example, a dispersant or a lubricant.

### 3.2 Electrolyte layer

The electrolyte layer 20 is disposed between the positive electrode active material layer 10 and the negative electrode active material layer 30. The electrolyte layer 20 comprises at least an electrolyte. The electrolyte layer 20 may comprise at least one of a solid electrolyte and an electrolytic solution, and may further optionally comprise a binder. The contents of the electrolyte and the binder in the electrolyte layer 20 are not particularly limited. Alternatively, the electrolyte layer 20 may comprise a separator for retaining an electrolytic solution and preventing contact between the positive electrode active material layer 10 and the negative electrode active material layer 30. The thickness of the electrolyte layer 20 is not particularly limited, and for example, may be 0.1 µm or more or 1 µm or more, and may be 2 mm or less or 1 mm or less.

The electrolyte layer 20 may consist of one layer, or may consist of a plurality of layers. For example, the electrolyte layer 20 may be provided with a first layer disposed on the positive electrode active material layer 10 side and a second layer disposed on the negative electrode active material layer 30 side, wherein the first layer may comprise a first electrolyte and the second layer may comprise a second electrolyte. The first electrolyte and the second electrolyte may be of different types from one another. The first electrolyte and the second electrolyte may each be at least one selected from the above oxide solid electrolytes, sulfide solid electrolytes, and solid electrolytes having ion-binding properties. For example, the first layer may comprise a solid electrolyte having ion-binding properties, and the second layer may comprise at least one of a solid electrolyte having ion-binding properties and a sulfide solid electrolyte.

The electrolyte contained in the electrolyte layer 20 needs only to be appropriately selected from among ones (solid electrolytes and/or liquid electrolytes) exemplified as an electrolyte that can be contained in the above positive electrode active material layer 10. The binder that can be contained in the electrolyte layer 20 needs only to be appropriately selected from among ones exemplified as a binder that can be contained in the above positive electrode active material layer. The electrolyte and the binder may each be of one type used alone, or may be of two or more types used in combination. The separator needs only to be a commonly used separator in lithium-ion secondary batteries, and for example, includes those composed of resins such as polyethylene (PE), polypropylene (PP), polyester, and polyamide. The separator may consist of a monolayer structure, or may consist of a multilayer structure. Examples of separators having a multilayer structure can include separators of a PE/PP bilayer structure and separators of a PP/PE/PP or PE/PP/PE trilayer structure. The separator may be composed of a nonwoven fabric such as cellulose nonwoven fabric, resin nonwoven fabric, or glass-fiber nonwoven fabric.

### 3.3 Negative electrode active material layer

The negative electrode active material layer 30 comprises at least a negative electrode active material. The negative electrode active material layer 30 may optionally comprise an electrolyte, a conductive aid, a binder, and various additives. The content of each component in the negative electrode active material layer 30 needs only to be appropriately determined in accordance with the target battery performance. For example, when the entire solid content of the negative electrode active material layer 30 is 100% by mass, the content of the negative electrode active material may be 40% by mass or more, 50% by mass or more, 60% by mass or more, or 70% by mass or more, and may be 100% by mass or less, less than 100% by mass, 95% by mass or less, or 90% by mass or less. Alternatively, when the entire negative electrode active material layer 30 is 100% by volume, the negative electrode active material and optionally the electrolyte, conductive aid, and binder in total may be contained at 85% by volume or more, 90% by volume or more, or 95% by volume or more, and the remaining portion may be voids or additional components. The shape of the negative electrode active material layer 30 is not particularly limited, and for example, may be a sheet having a substantially flat surface. The thickness of the negative electrode active material layer 30 is not particularly limited, and for example, may be 0.1 µm or more, 1 µm or more, 10 µm or more, or 30 µm or more, and may be 2 mm or less, 1 mm or less, 500 µm or less, or 100 µm or less.

### 3.3.1 Negative electrode active material

Any known negative electrode active material for lithium-ion secondary batteries can be adopted as the negative electrode active material. Of known active materials, various materials having low electric potential (charge and discharge potentials) for storing and releasing lithium ions compared to the above positive electrode active material can be adopted. For example, silicon-based active materials such as Si, Si alloys, and silicon oxides; carbon-based active materials such as graphite and hard carbon; various oxide-based active materials such as lithium titanate; and metallic lithium and lithium alloys can be adopted. Of these, when the negative electrode active material layer 30 comprises Si as a negative electrode active material, performance of the lithium-ion secondary battery 100 is easily improved. The negative electrode active material may be of one type used alone, or may be of two or more types used in combination. The shape of the negative electrode active material needs only to be any general shape of negative electrode active materials of secondary batteries. For example, the negative electrode active material may be particulate. The negative electrode active material particles may be primary particles, or may be secondary particles of a plurality of agglomerated primary particles. The average particle diameter (D50) of the negative electrode active material particles, for example, may be 1 nm or more, 5 nm or more, or 10 nm or more, and may be 500 µm or less, 100 µm or less, 50 µm or less, or 30 µm or less. Alternatively, the negative electrode active material may be sheet-like (foil-like or membranous), such as a lithium foil. Specifically, the negative electrode active material layer 30 may consist of a sheet of negative electrode active material.

### 3.3.2 Others

The electrolyte that can be contained in the negative electrode active material layer 30, for example, includes the solid electrolytes and electrolytic solutions described above, and combinations thereof. The conductive aid that can be contained in the negative electrode active material layer 30, for example, needs only to be appropriately selected from among ones exemplified as a conductive aid that can be contained in the positive electrode active material layer described above. The binder that can be contained in the negative electrode active material layer 30, for example, needs only to be appropriately selected from among ones exemplified as a binder that can be contained in the positive electrode active material layer described above. The electrolyte, the conductive aid, and the binder may each be of one type used alone, or may be of two or more types used in combination.

### 3.4 Positive electrode current collector

As shown in FIG. 2, the lithium-ion secondary battery 100 may be provided with a positive electrode current collector 40 in contact with the positive electrode active material layer 10. Any general positive electrode current collector for secondary batteries can be adopted as the positive electrode current collector 40. The positive electrode current collector 40 may have at least one shape selected from foil-like, tabular, mesh-like, and punched metal-like shapes and foam. The positive electrode current collector 40 may be composed of a metal foil or a metal mesh. Particularly, a metal foil has excellent handleability. The positive electrode current collector 40 may consist of a plurality of foils. Examples of metals constituting the positive electrode current collector 40 include at least one selected from Cu, Ni, Cr, Au, Pt, Ag, Al, Fe, Ti, Zn, Co, V, Mg, Pg, Ge, In, Sn, Zr, and stainless steel. Particularly, from the viewpoint of ensuring oxidation resistance, the positive electrode current collector 40 may comprise Al. The positive electrode current collector 40 may have on the surface thereof some coating layer for the purpose of adjusting resistance. For example, the positive electrode current collector 40 may have a carbon coating layer. The positive electrode current collector 40 may be a metal foil or substrate plated or vapor-deposited with a metal described above. When the positive electrode current collector 40 consists of a plurality of metal foils, there may be some layer between the plurality of metal foils. The thickness of the positive electrode current collector 40 is not particularly limited, and for example, may be 0.1 µm or more or 1 µm or more, and may be 1 mm or less or 100 µm or less.

### 3.5 Negative electrode current collector

As shown in FIG. 2, the lithium-ion secondary battery 100 may be provided with a negative electrode current collector 50 in contact with the negative electrode active material layer 30. Any general negative electrode current collector for secondary batteries can be adopted as the negative electrode current collector 50. The negative electrode current collector 50 may be foil-like, tabular, mesh-like, punched metal-like, or a foam. The negative electrode current collector 50 may be a metal foil or a metal mesh, and alternatively, may be a carbon sheet. Particularly, a metal foil has excellent handleability. The negative electrode current collector 50 may consist of a plurality of foils or sheets. Metals constituting the negative electrode current collector 50 include at least one selected from Cu, Ni, Cr, Au, Pt, Ag, Al, Fe, Ti, Zn, Co, V, Mg, Pb, Ge, In, Sn, Zr, and stainless steel. Particularly, from the viewpoint of ensuring reduction resistance and the viewpoint of making alloying with lithium difficult, the negative electrode current collector 50 may comprise at least one metal selected from Cu, Ni, and stainless steel. The negative electrode current collector 50 may have on the surface thereof some coating layer for the purpose of adjusting resistance. For example, the negative electrode current collector 50 may have a carbon coating layer. The negative electrode current collector 50 may be an aluminum foil having a carbon coating layer. The negative electrode current collector 50 may be a metal foil or a substrate plated or vapor-deposited with a metal described above. When the negative electrode current collector 50 consists of a plurality of metal foils, there may be some layer between the plurality of metal foils. The thickness of the negative electrode current collector 50 is not particularly limited, and for example, may be 0.1 µm or more or 1 µm or more, and may be 1 mm or less or 100 µm or less.

### 3.6 Additional configurations

The lithium-ion secondary battery 100, in addition to the above configuration, may be provided with any general configuration as a secondary battery, for example, tabs or terminals. The above configurations of the lithium-ion secondary battery 100 may each be housed inside an outer packaging. Any known outer packaging can be adopted as the outer packaging of the battery. In addition, a plurality of secondary batteries 100 may be optionally connected electrically and optionally stacked to form a battery pack. In this case, the battery pack may be housed inside a known battery case. Examples of shapes of the lithium-ion secondary battery 100 can include coin type, laminate type, cylindrical type, and rectangular type.

The lithium-ion secondary battery 100 can be manufactured by applying any known method, except that the above specific positive electrode active material be used, and for example, can be manufactured as follows. However, the manufacturing method for the lithium-ion secondary battery 100 is not limited to the following method. For example, each layer may be formed by dry molding.
(1) A positive electrode active material constituting a positive electrode active material layer is dispersed in a solvent to obtain a positive electrode layer slurry. The solvent used in this case is not particularly limited, and water and various organic solvents can be used. The positive electrode layer slurry is then applied on a surface of a positive electrode current collector using a doctor blade, followed by drying, whereby a positive electrode active material layer is formed on the surface of the positive electrode current collector to obtain a positive electrode.
(2) A negative electrode active material constituting a negative electrode active material layer is dispersed in a solvent to obtain a negative electrode layer slurry. The solvent used in this case is not particularly limited, and water and various organic solvents can be used. The negative electrode layer slurry is then applied on a surface of a negative electrode current collector using a doctor blade, followed by drying, whereby a negative electrode active material layer is formed on the surface of the negative electrode current collector to obtain a negative electrode.
(3) Layers are laminated so that an electrolyte layer (solid electrolyte layer or separator) is interposed between the negative electrode and the positive electrode to obtain a laminated body comprising a negative electrode current collector, a negative electrode active material layer, an electrolyte layer, a positive electrode active material layer, and a positive electrode current collector in this order. Additional members such as terminals are attached to the laminated body as needed.
(4) The laminated body is housed in a battery case, and in the case of an electrolytic solution battery, the battery case is filled therein with an electrolytic solution, and the laminated body is sealed in the battery case so that the laminated body is immersed in the electrolytic solution, whereby a secondary battery is obtained. In the case of an electrolytic solution battery, the electrolytic solution may be incorporated into the negative electrode active material layer, the separator, and the positive electrode active material layer at step (3) above.

### 4. Method of increasing capacity of lithium-ion secondary battery

The technique of the present disclosure also has an aspect of a method of increasing the capacity of a lithium-ion secondary battery. Specifically, the method of increasing the capacity of a lithium-ion secondary battery of the present disclosure is characterized by the use of the positive electrode active material of the present disclosure above in a positive electrode active material layer of the lithium-ion secondary battery.

### 5. Vehicle having lithium-ion secondary battery

As described above, the positive electrode active material of the present disclosure has a large capacity, and is suitable as a positive electrode active material for lithium-ion secondary batteries. Lithium-ion secondary batteries having such a large capacity, for example, can be suitably used in at least one type of vehicle selected from hybrid vehicles (HEV), plug-in hybrid vehicles (PHEV), and battery electric vehicles (BEV). Specifically, the technique of the present disclosure has an aspect of a vehicle comprising a lithium-ion secondary battery, wherein the lithium-ion secondary battery comprises a positive electrode active material layer, an electrolyte layer, and a negative electrode active material layer, and wherein the positive electrode active material layer comprises the above positive electrode active material of the present disclosure.

### EXAMPLES

As described above, one embodiment for each of the positive electrode active material and the lithium-ion secondary battery has been described. However, it is possible to modify the technique of the present disclosure in various ways other than the above embodiments without departing from the spirit thereof. Hereinafter, the technique of the present disclosure will be further described in detail with reference to the Examples. However, the technique of the present disclosure is not limited to the following Examples.

### 1. Production of positive electrode active material

### 1.1 Example 1

### 1.1.1 Production of precursor

(1) MnSO₄·5H₂O, NiSO₄·6H₂O, and CoSO₄·7H₂O were weighed to a target compositional ratio and dissolved in distilled water to a concentration of 1.2 mol/L to obtain a first solution. In a separate container, Na2CO3 was dissolved in distilled water to a concentration of 1.2 mol/L to obtain a second solution.
(2) 1000 mL of pure water was loaded into a reactor (with baffle boards), and 500 mL of the first solution and 500 mL of the second solution were each added dropwise therein at a rate of about 4 mL/min.
(3) Upon the completion of the dropwise addition, the mixture was stirred at a stirring rate of 150 rpm at room temperature for 1 h to obtain a product.
(4) The product was washed with pure water and subjected to solid-liquid separation with a centrifugal separator, and a precipitate was collected.
(5) The resulting precipitate was dried overnight at 120°C, crushed in a mortar, and then separated into coarse particles and fine particles by airflow classification. Both of the coarse particles and the fine particles were composite salts comprising Mn, Ni, and Co. The coarse particles were spherical particles having an average particle diameter D50 of 3.8 µm and having a roundness of 0.86. The fine particles were spherical particles having an average particle diameter D50 of 1.4 µm and having a roundness of 0.80. In Example 1, the coarse particles were used as precursor particles.

### 1.1.2 Production of composite

(1) Na2CO3 and distilled water were weighed to 1150 g/L and then stirred to complete dissolution using a stirrer to produce a Na2CO3 aqueous solution.
(2) The above Na2CO3 aqueous solution and the above precursor particles were weighed and mixed so as to have a composition of Na_{0.7}Mn_{0.5}Ni_{0.2}Co_{0.3}O₂ after the firing described below to obtain a slurry.
(3) The above slurry was airflow-dried by spray drying to obtain a composite. Specifically, using a spray drying apparatus DL410, under the conditions of a slurry feed rate of 30 mL/min, an inlet temperature of 200°C, a circulating air volume of 0.8 m³/min, and a spraying air pressure of 0.3 MPa, the above slurry was airflow-dried and surfaces of the precursor particles were covered with Na2CO3 to obtain a composite. In the composite, 77% by area of the surfaces of the precursor particles were covered with Na2CO3.

### 1.1.3 Firing of composite

The composite was loaded into an alumina crucible and fired in an ambient air atmosphere to obtain a Na-containing oxide having a P2-type structure. The firing conditions were as described in the following (1) to (7).
(1) An alumina crucible containing the above composite was set in a heating furnace having an ambient air atmosphere.
(2) Temperature inside the heating furnace was raised from room temperature (25°C) to 600°C in 115 min.
(3) The inside of the heating furnace was kept at 600°C for 360 min to carry out pre-firing.
(4) After pre-firing, temperature inside the heating furnace was raised from 600°C to 900°C in 100 min.
(5) The inside of the heating furnace was kept at 900°C for 60 min to carry out main firing.
(6) After main firing, temperature inside the heating furnace was lowered from 900°C to 250°C in 120 min.
(7) The alumina crucible was removed from the heating furnace at 250°C and left to cool outside the furnace and in a dry atmosphere to reach 25°C in 10 min.

The fired product after cooling was crushed using a mortar in a dry atmosphere to obtain Na-containing oxide particles A having a P2-type structure.

### 1.1.4 Ion exchange

(1) LiNO3 and LiCl were weighed to a molar ratio of 50:50 and mixed with the above P2-type particles A at a molar ratio 10 times the minimum Li amount required for ion exchange to obtain a mixture.
(2) An alumina crucible was used to carry out ion exchange at 280°C for 1 h in an ambient air atmosphere to obtain a product comprising a Li-containing oxide.
(3) The product was washed off of any salt remaining thereon with pure water and subjected to solid-liquid separation by vacuum filtration to obtain a precipitate.
(4) The resulting precipitate was dried overnight at 120°C to obtain a positive electrode active material according to Example 1.

### 1.2 Example 2

### 1.2.1 Production of precursor

Coarse particles and fine particles were obtained in the same manner as in Example 1, and then the fine particles were used as precursor particles.

### 1.2.2 Production of composite

Except that fine particles were used as the precursor particles, a composite was obtained by spray drying in the same manner as in Example 1. In the composite, 73% by area of the surfaces of the precursor particles were covered with Na2CO3.

### 1.2.3 Firing of composite

The composite was loaded into an alumina crucible and fired in an ambient air atmosphere to obtain a Na-containing oxide having a P2-type structure. The firing conditions were as described in the following (1) to (7).
(1) An alumina crucible containing the above composite was set in a heating furnace having an ambient air atmosphere.
(2) Temperature inside the heating furnace was raised from room temperature (25°C) to 600°C in 115 min.
(3) The inside of the heating furnace was kept at 600°C for 360 min to carry out pre-firing.
(4) After pre-firing, temperature inside the heating furnace was raised from 600°C to 1000°C in 160 min.
(5) The inside of the heating furnace was kept at 1000°C for 60 min to carry out main firing.
(6) After main firing, temperature inside the heating furnace was lowered from 1000°C to 250°C in 160 min.
(7) The alumina crucible was removed from the heating furnace at 250°C and left to cool outside the furnace and in a dry atmosphere to reach 25°C in 10 min.

The fired product after cooling was crushed using a mortar in a dry atmosphere to obtain Na-containing oxide particles B having a P2-type structure.

### 1.2.4 Ion exchange

Except that Na-containing oxide particles B were used in place of Na-containing oxide particles A, ion exchange was carried out under the same conditions as those in Example 1 to obtain the positive electrode active material according to Example 2.

### 1.3 Comparative Example 1

### 1.3.1 Production of precursor particles

In the same manner as in Example 2, fine particles were used as precursor particles.

### 1.3.2 Production of composite

Na2CO3 and the precursor particles were weighed so as to have a composition of Na_{0.7}Mn_{0.5}Ni_{0.2}Co_{0.3}O₂. The weighed precursor and Na2CO3 were mixed using a mortar, whereby a composite was obtained. In the composite, 24% by area of surfaces of the precursor particles were covered with Na2CO3.

### 1.3.3 Firing of composite

The composite was loaded into an alumina crucible and fired in an ambient air atmosphere to obtain a Na-containing oxide having a P2-type structure. The firing conditions were as described in the following (1) to (7).
(1) An alumina crucible containing the above composite was set in a heating furnace having an ambient air atmosphere.
(2) Temperature inside the heating furnace was raised from room temperature (25°C) to 600°C in 115 min.
(3) The inside of the heating furnace was kept at 600°C for 360 min to carry out pre-firing.
(4) After pre-firing, temperature inside the heating furnace was raised from 600°C to 950°C in 120 min.
(5) The inside of the heating furnace was kept at 950°C for 60 min to carry out main firing.
(6) After main firing, temperature inside the heating furnace was lowered from 950°C to 250°C in 140 min.
(7) The alumina crucible was removed from the heating furnace at 250°C and left to cool outside the furnace and in a dry atmosphere to reach 25°C in 10 min.

The fired product after cooling was crushed using a mortar in a dry atmosphere to obtain Na-containing oxide particles C having a P2-type structure.

### 1.3.4 Ion exchange

Except that Na-containing oxide particles C were used in place of Na-containing oxide particles A, ion exchange was carried out under the same conditions as those in Example 1 to obtain the positive electrode active material according to Comparative Example 1.

### 1.4 Comparative Example 2

### 1.4.1 Production of precursor particles

In the same manner as in Example 1, coarse particles were used as precursor particles.

### 1.4.2 Production of composite

Except that coarse particles were used as the precursor particles, a composite was obtained in the same manner as in Comparative Example 1. In the composite, 26% by area of the surfaces of the precursor particles were covered with Na2CO3.

### 1.4.3 Firing of composite

The composite was loaded into an alumina crucible and fired in an ambient air atmosphere to obtain a Na-containing oxide having a P2-type structure. The firing conditions were the same as those in Example 2.

The fired product after cooling was crushed using a mortar in a dry atmosphere to obtain Na-containing oxide particles D having a P2-type structure.

### 1.4.4 Ion exchange

Except that Na-containing oxide particles D were used in place of Na-containing oxide particles A, ion exchange was carried out under the same conditions as in Example 1 to obtain the positive electrode active material according to Comparative Example 2.

### 2. Evaluation of positive electrode active material

### 2.1 Elemental analysis

The positive electrode active material of each of Examples 1 and 2 and Comparative Examples 1 and 2 was subjected to elemental analysis to identify the chemical composition. Results are shown in Table 1 below.

### 2.2 Identification of crystal structure by X-ray diffraction measurement

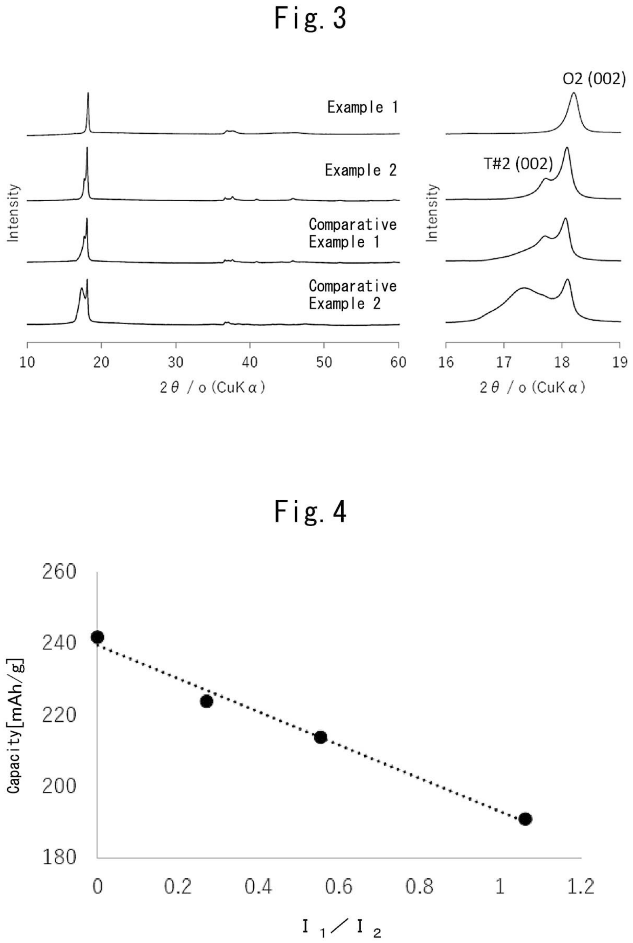

For each of the positive electrode active materials of Examples 1 and 2 and Comparative Examples 1 and 2, X-ray diffraction measurement was carried out using CuKα as a radiation source to acquire an X-ray diffraction pattern. FIG. 3 shows the X-ray diffraction pattern of each of Examples 1 and 2 and Comparative Examples 1 and 2. As shown in FIG. 3, it was found that all of the positive electrode active materials of Examples 1 and 2 and Comparative Examples 1 and 2 had an O2-type structure. In addition, as shown in FIG. 3, it was found that the positive electrode active materials according to Examples 1 and 2 had lower X-ray diffraction peak intensities originating from the (002) plane of the T#2-type structure relative to the X-ray diffraction peak intensities originating from the (002) plane of the O2-type structure, compared to the positive electrode active materials of Comparative Examples 1 and 2. For each of Examples 1 and 2 and Comparative Examples 1 and 2, a ratio I₁/I₂ of X-ray diffraction peak intensity I₁ originating from the (002) plane of the T#2-type structure to X-ray diffraction peak intensity I₂ originating from the (002) plane of the O2-type structure is shown in Table 1 below.

### 3. Production of evaluation cell

The positive electrode active material of each of Examples 1 and 2 and Comparative Examples 1 and 2 was used to produce a coin cell. The production procedure of the coin cell was as follows.
(1) A positive electrode active material, acetylene black (AB) as a conductive aid, and polyvinylidene fluoride (PVdF) as a binder were weighed so as to have a mass ratio of positive electrode active material : AB : PVdF = 85:10:5, and dispersed and mixed in N-methyl-2-pyrrolidone to obtain a positive electrode mixture slurry. The positive electrode mixture slurry was applied on an aluminum foil and vacuum-dried overnight at 120°C to obtain a positive electrode, which was a laminate of a positive electrode active material layer and a positive electrode current collector.
(2) LiPF6 was dissolved at a concentration of 1 M in a mixed solvent obtained by mixing trifluoropropylene carbonate (TFPC) and trifluoroethyl methyl carbonate (TFEMC) at a ratio of TFPC:TFEMC = 30 vol%:70 vol% to obtain an electrolytic solution.
(3) A metallic lithium foil was prepared as a negative electrode.
(4) The positive electrode, the electrolytic solution, and the negative electrode were used to produce a coin cell (CR2032).

### 4. Evaluation of charging and discharging characteristics

Each of the coin cells was charged and discharged at a voltage range of 2.0 to 4.8 V and at a rate of 0.1 C (1 C = 220 mA/g) in a thermostatic chamber maintained at 25°C, and the capacity was measured. Results are shown in Table 1 below.

### 5. Evaluation results

For each of Examples 1 and 2 and Comparative Examples 1 and 2, the chemical composition of the positive electrode active material, the I₁/I₂ identified from X-ray diffraction pattern, and the capacity of the evaluation cell are shown. In addition, the relationship between I₁/I₂ and capacity is shown in FIG. 4.

**(Table 1)**

| | Chemical composition | I₁/I₂ | Capacity [mAh/g] |
|---|---|---|---|
| Example 1 | Li0.63Mn0.54Ni0.17Co0.29O2 | 0 | 242 |
| Example 2 | Li0.68Mn0.51Ni0.19Co0.31O2 | 0.27 | 224 |
| Comparative Example 1 | Li0.63Mn0.51Ni0.19Co0.30O2 | 0.55 | 214 |
| Comparative Example 2 | Li0.60Mn0.54Ni0.17Co0.29O2 | 1.06 | 191 |

As is clear from the results shown in Table 1 and FIG. 4, the positive electrode active materials according to Examples 1 and 2, in which I₁/I₂ was 0.30 or less, have large capacities relative to the positive electrode active materials according to Comparative Examples 1 and 2, in which I₁/I₂ exceeded 0.30. Specifically, in the Li-containing oxide having an O2-type structure, the higher the X-ray diffraction peak intensity originating from the O2-type structure and the lower the X-ray diffraction peak intensity originating from the T#2-type structure, the more the capacity of the positive electrode active material is increased.

### 6. Supplemental

In the above Examples, although a precursor obtained by a coprecipitation method was exemplified, the precursor can be obtained by other methods. In addition, in the above Examples, although a composite obtained by coating the surface of the precursor with a Na source by spray drying was exemplified, the composite can be obtained by other methods. Further, in the above Examples, although a Na-containing oxide having a P2-type structure and a Li-containing oxide having an O2-type structure having predetermined chemical compositions were exemplified, the chemical compositions of the Na-containing oxide and the Li-containing oxide are not limited thereto. Furthermore, the Na-containing oxide and the Li-containing oxide may be doped with an element M other than Mn, Ni, or Co. The element M is as described in the embodiments.

### 7. Conclusion

As described above, it can be said that in the positive electrode active material comprising a Li-containing oxide, when the Li-containing oxide satisfies the following requirements (1) to (3), the capacity of the positive electrode active material is increased.
(1) The Li-containing oxide has an O2-type structure.
(2) The Li-containing oxide at least comprises, as constituent elements, at least one element among Mn, Ni, and Co; Li; and O.
(3) An X-ray diffraction pattern of the Li-containing oxide satisfies 0 ≤ I1/I2 ≤ 0.30.

The I1 is an X-ray diffraction peak intensity originating from the (002) plane of a T#2-type structure, and the I2 is an X-ray diffraction peak intensity originating from the (002) plane of the O2-type structure.

### REFERENCE SIGNS LIST

- 100: lithium-ion secondary battery
- 10: positive electrode active material layer
- 20: electrolyte layer
- 30: negative electrode active material layer
- 40: positive electrode current collector
- 50: negative electrode current collector

## Claims

1. A positive electrode active material, comprising a Li-containing oxide, wherein
the Li-containing oxide has an O2-type structure,
the Li-containing oxide comprises, as constituent elements,
at least one element among Mn, Ni, and Co;
Li; and
O,
an X-ray diffraction pattern of the Li-containing oxide satisfies 0 ≤ I₁/I₂ ≤ 0.30,
the I1 is an intensity of X-ray diffraction peak originating from (002) plane of a T#2-type structure, and
the I2 is an intensity of X-ray diffraction peak originating from (002) plane of the O2-type structure.

2. The positive electrode active material according to claim 1, wherein
the Li-containing oxide has a chemical composition represented by LiₐNa_{b}Mnₓ₋ₚNi_{y-q}Co_{z-r}M_{p+q+r}O₂ (where 0 < a ≤ 1.00; 0 ≤ b ≤ 0.20; x + y + z = 1; and 0 ≤ p + q + r < 0.17, and the element M is at least one selected from B, Mg, Al, K, Ca, Ti, V, Cr, Fe, Cu, Zn, Ga, Ge, Sr, Y, Zr, Nb, Mo, and W).

3. The positive electrode active material according to claim 1 or 2, wherein
the Li-containing oxide comprises, as constituent elements, at least Li, Mn, Ni, Co, and O.

4. A lithium-ion secondary battery, comprising a positive electrode active material layer, an electrolyte layer, and a negative electrode active material layer, wherein
the positive electrode active material layer comprises the positive electrode active material according to any one of claims 1 to 3.
